# EUROPEAN PATENT SPECIFICATION

(11) **EP 4 216 352 B1**
(45) Date of publication and mention of the grant of the patent: **23.04.2025**
(21) Application number: 22152785.6
(22) Date of filing: 21.01.2022
(51) Int. Cl.: H01M 50/249, B60K 1/04

(54) **BATTERY HOLDER AND MANUFACTURING PROCESS OF SAID BATTERY HOLDER**
BATTERIEHALTER UND VERFAHREN ZUR HERSTELLUNG EINES SOLCHEN BATTERIEHALTERS
SUPPORT DE BATTERIE ET PROCÉDÉ DE FABRICATION DUDIT SUPPORT DE BATTERIE

(43) Date of publication of application: 26.07.2023
(73) Proprietor: Constellium Singen GmbH, 78224 Singen (DE); Constellium UK Limited, Burnham, SL1 8DF (GB); Constellium Automotive USA, LLC, Van Burne Township, MI 48111 (US)
(72) Inventor: PATRINOS, Panagiotis, Londres, W53HR (GB); BEN TAHAR, Mehdi, 38000 Grenoble (FR); JARRETT, Martin, LITTLE BOURTON, OX17 1RB (GB)
(74) Representative: Constellium - Propriété Industrielle

(56) References cited:
- WO-A1-2011/061571
- WO-A1-2019/169080
- CN-A- 110 571 384
- CN-A- 110 977 337
- US-A1- 2017 194 609
- US-A1- 2019 381 899

## Description

### TECHNICAL FIELD OF THE INVENTION

This invention relates to the field of electric or hybrid motorized transport vehicle, and more particularly to a battery holder intended to receive all or part of a battery to be supported by the battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of side impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum or a combination of several of these materials and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types which can determine the geometry, the size, the range as well as the vulnerability of the energy storage system. Consequently, the type of cells selected will influence the final design and shape of the battery enclosures.

A first main characteristics that a battery enclosure should have is that it needs to be sufficiently robust to reduce the chances of deforming when the vehicle is involved in an accident. For this reason, the battery enclosure must have sufficient strength in order to reduce the chances of damaging internals of the enclosure, which could eventually cause serious damage to the vehicle and its surroundings.

A second primordial characteristics a battery enclosure must have is that it must meet standards that are mandatory, such as leak tightness. That is to say that no water or any other debris must penetrate the battery enclosure. A key parameter allowing to meet this requirement is to ensure a battery enclosure showing good flatness, especially to seal the lid on top of the above structure of the battery enclosure. However, when assembling the frame parts constituting the frame, it is needed to use fastening means such as bolting system, or welding. Those fastening means can generate distortion in the frame structure and induce slight irregularities in the flatness of the frame.

It is known in document JP6605344B2 a frame for battery holder comprising an inner frame made of one piece frame part bended to the desired shape. This solution is satisfactory in that it allows to reduce the number of joint points around the frame. However, such structure generates a frame showing a high radius of curvature in each corner, reducing by this way the possibility to hold a larger quantity of battery modules or cells, compared to a frame with right angles. Besides, manufacturing a frame in one piece involves a complex manufacturing process which increases the overall manufacturing cost of the battery holder.

The document US8739909B2 as does WO 2011 061 571, discloses a battery holder frame comprising a pair of symmetrical frame members presenting a U shape, and joined to each other so that the ends of one frame member faces the end of the other frame member. In this configuration and compared to the previously cited document, the manufacturing process is simplified. However, said battery holder still limits the possible amount of battery modules or cells supported by the battery holder.

### SUMMARY OF THE INVENTION

The present invention aims at solving the aforementioned problems. To this end, the invention concerns a battery holder for a transport vehicle as given in claim 1, the battery holder comprising a frame and a floor delimiting between them a housing intended to receive all or part of a battery, said frame having a closed shape comprising a first corner and a second corner, the frame being connected to the floor and comprising:
- a main frame part comprising a main profile formed in one piece, said main profile extending along a bending curve between a first end and a second end of the main profile, said bending curve comprising a first curved portion disposed between the first end and the second end ; and
- a closing frame part distinct from the main frame part, and comprising a closing element extending along a lateral direction between a primary end portion and a secondary end portion of the closing element, the closing element presenting externally a cooperation surface; and
the first end of the main profile leaning on the cooperation surface and being secured to the cooperation surface at the primary end portion of the closing element so as to form the first corner of the closed shape of the frame, and the second end of the main profile leaning on the cooperation surface and being secured to the cooperation surface of the closing element at the secondary end portion of the closing element so as to form the second corner of the closed shape of the frame, the arrangement constituted by the main profile and the closing element assembled together forming said closed shape connected to the floor.

The arrangements described above make it possible to provide a battery holder with a closed shape connected to the floor with the use of two frame parts. Besides, the main frame part being formed in one piece allows to limit the number of joining points between different frame parts. Finally, assembling the frame by securing the main frame part on the cooperation surface of the closing frame part allows to form the first corner and the second corner of the frame in order to keep enough space able to receive a larger amount of battery cells or modules.

It is well understood that the frame is assembled by joining the main frame part and the closing frame part at the first corner and at the second corner.

According to an embodiment, the battery holder comprises on or more of the following features, taken alone or in combination.

According to one embodiment, the cooperation surface is perpendicular to the bending curve.

Alternatively, the closing element can be inserted between two branches of the main profile, said two branches being shifted laterally along the lateral direction. Thus, the cooperation surface is perpendicular to the lateral direction.

According to one embodiment, the cooperation surface is parallel to the lateral direction.

According to one embodiment, the cooperation surface is extending transversally to the floor.

According to one embodiment, the lateral direction is perpendicular to the direction of travel of the transport vehicle.

According to one embodiment, it is possible to define a spatial reference associated to the battery holder, and for example attached to the floor. Said spatial reference may comprises the following three axes:
- a longitudinal axis called "X", intended to extend longitudinally along the traveling direction of the vehicle;
- a lateral axis called "Y" extending laterally in the plane of the floor and generally perpendicular to the axis X;
- a transversal axis called "Z" extending transversely relative to the plane of the floor.

According to this reference, the closing frame part is extending along the lateral direction, which is parallel or confounded with the lateral axis.

According to one embodiment, the closing element is a profile of the same type than the main profile. That is to say, the cross section, the material, and the thickness of the closing element are identical to that of the main profile. Consequently, the advantages presented above concerning the main profile especially concerning the shape and the cross section applies to the closing element too.

Alternatively, the closing element may present a different type and a different shape with respect with the main profile. For example, the closing element may be manufactured by casting, stamping, extrusion, or any other manufacturing process.

According to one embodiment, the main profile presents a concave shape, said concave shape presenting a concavity directed towards the closing element.

By "concave shape" related to the main profile, it is meant that said main profile is curved and that the apex of the curvature belongs to a plane from which the main profile moves away in the direction of the closing element.

According to one embodiment, the main profile presents two branches shifted laterally along the lateral direction.

According to one embodiment, the first end presents a first cross section viewed in a first plan locally perpendicular to the bending curve, and the second end presents a second cross section viewed in a second plan locally perpendicular to the bending curve.

According to one embodiment, the first cross section leans on the cooperation surface and is secured to the cooperation surface at the primary end portion of the closing element so as to form the first corner.

According to one embodiment, the second cross section leans on the cooperation surface and is secured to the cooperation surface at the secondary end portion of the closing element so as to form the second corner.

According to one embodiment, the bending curve of the main profile comprises a second curved portion distinct from the first curved portion, the first curved portion and the second curved portion being linked with each other by a straight portion of the main profile, in a way that the bending curve presents a U shape, the closing frame part being secured to the main profile so as to close said U shape of the main profile.

Advantageously, said U shape allows to provide a flatter battery holder. This configuration allows to improve the sealing issues of the battery holder.

According to one embodiment, at least one angle chosen between:
- a first angle between the lateral direction and the bending curve at the first end, and
- a second angle between the lateral direction and the bending curve at the second end,
is comprised between 80° and 120°, and more particularly between 85° and 100°, and more particularly equal to 90°.

It is well understood that the first angle is disposed at the first corner and that the second angle is disposed at the second corner.

Advantageously, providing a frame comprising at least one angle close or equal to a right angle allows to accommodate more battery cells or modules in the housing of the battery holder.

According to one embodiment, at least one element chosen between the main profile and the closing element is an extruded profile.

The arrangements described above allows to reduce the overall manufacturing cost of the battery holder.

According to one embodiment, the at least one element comprises extruded aluminum profile.

Advantageously, using an aluminum extruded profile allows to reduce the overall weight of the battery holder.

According to one embodiment, the main profile has a cross section viewed perpendicular to the bending curve which is constant along the bending curve. Consequently, the first cross section and the second cross section presents the same shape.

According to one embodiment, the cross section of the main profile comprises one or several cavities.

According to one embodiment, the cross section of the main profile along the bending curve comprises an admission opening being opened on a side opposite to the housing, with respect with the main profile.

According to one embodiment, the cross section of closing element along its length comprises an admission opening being opened on a side opposite to the housing, with respect with the closing element.

Advantageously, said admission opening allows to insert or attach other elements to the main profile and/or to the closing element.

According to one embodiment, the cross-section of the main profile along the bending curve presents a solid shape, or a hollow profile.

According to one embodiment, the cross section of the main profile along the bending curve comprises an internal opening being opened towards the housing with respect with the main profile. For example, said internal opening may be configured to receive the cooperation surface of the closing element.

According to one embodiment, the cooperation surface comprises longitudinal fins configured to cooperate by interlocking with the main profile so as to form the first corner and the second corner.

According to one embodiment, the cooperation surface comprises longitudinal fins configured to be inserted between two branches of the main profile.

According to one embodiment, the cross section of the main profile comprises a groove disposed on an external surface of the main profile which is on a side opposite to the housing, with respect with the main profile

According to one embodiment, the main frame part comprises an external profile disposed opposite to the floor compared to the main profile, said external profile being configured to absorb all or part of impact energy by an external element likely to be applied to the battery holder.

The arrangements described above allows to protect the battery modules or cells from impacts and shocks.

According to one embodiment, the admission opening is configured to receive the external profile.

Thus, the external profile fits with the frame structure allowing to have a better integration of the external profile.

According to one embodiment, an opening dimension of the admission opening is strictly superior to a transversal dimension of the external profile, viewed along a transversal direction extending transversally to the plane of the floor.

The arrangement described above make it possible to decouple the main profile from the external profile during the assembly process. The dimensional gap between the main profile and the external profile which is generated by a difference in transversal dimensions of said profile, allows to compensate for eventual distortions of the main profile and/or the external profile.

According to one embodiment, the external profile comprises mounting points configured to secure the battery holder to the vehicle. Thus, decoupling the main profile from the external profile during the frame assembly allows to ensure accurate positioning of the mounting points.

According to one embodiment the closing frame comprises an external profile disposed opposite to the floor compared to the closing frame, said external profile being positioned in the admission opening of the closing element.

**The** object of the invention may also be achieved by implementing an electric or hybrid motorized transport vehicle comprising a battery holder of the type of one of those presented previously.

**The** object of the invention may also be achieved by implementing a manufacturing process of a battery holder for a transport vehicle as given in claim 12 and comprising the following steps:
- providing an initial main profile extending between a first end and a second end;
- providing a closing element extending between a primary end portion and a secondary end portion, the closing element presenting externally, a cooperation surface;
- bending the initial main profile according to a bending curve so as to form a main profile extending along the bending curve between the first end and the second end, the main profile having a first curved portion disposed between the first end and the second end;
- assembling a frame having a closed shape by securing the first end of the main profile to the primary end portion of the closing element, when the first end of the main profile is leaning on the cooperation surface at the level of the primary end portion so as to form a first corner of the closed shape; and by securing the second end of the main profile to the secondary end portion of the closing element, when the second end of the main profile is leaning on the cooperation surface at the level of the secondary end portion so as to form a second corner of the closed shape, the arrangement constituted by the main profile and the closing element assembled together forming said closed shape comprising the first corner and the second corner;
- assembling the battery holder by securing a floor and the frame, the battery holder in which the closed shape of the frame is connected to the floor and in which the frame and the floor are delimiting between them a housing intended to receive all or part of a battery.

According to an embodiment, the manufacturing process comprises one or more of the following features, taken alone or in combination.

According to one embodiment, the first curved portion is disjoint from the first end and from the second end.

According to one embodiment, the bending step is performed so as to form a second curved portion distinct from the first curved portion, in a way that allows to form a concave main profile.

According to one embodiment, the initial main profile is straight.

According to one embodiment, the step of bending the initial main profile is performed according to a bending curve having a U shape.

According to one embodiment, the bending curve is concave.

According to one embodiment, the step of bending is performed by free form bending process, or by roll bending process, or by draw bending process, or any other bending process.

According to one embodiment, the bending process used to perform the bending step is chosen with respect with the complexity of the cross section of the main profile and the desired corner radius.

According to one embodiment, the manufacturing process further comprises the following steps:
- providing an external profile configured to absorb all or part of side impact by an external element likely to be applied to the battery holder;
- securing the external profile with at least one profile chosen between the main profile and the closing element, at a position opposite to the floor compared to said at least one profile.

According to one embodiment, the manufacturing process further comprises the following steps:
- providing a reinforcing profile configured to reinforce the mechanical strength of the frame, said reinforcing profile being straight;
- securing the reinforcing profile by its ends to two opposite branches of the U shaped main profile.

According to one embodiment, the manufacturing process further comprise cutting the main profile, said cutting being performed after the bending of the main profile.

According to an embodiment where the main profile presents a U shape, the cutting step is performed so as to adjust the length of the free branches formed by the U shape. Thus, it is possible to adapt the size of said branches before assembling the closing element with the main profile.

According to one embodiment, the manufacturing process further comprises the following steps:
- proving a lid;
- securing the lid to the frame so as to close the housing.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically a perspective view of a floor and a frame according to one embodiment of the invention.
Figure 2 represents schematically two perspective views of a battery holder according to one embodiment of the invention.
Figure 3 represents schematically two perspective views of a battery holder according to one embodiment of the invention.
Figure 4 represents schematically three perspective views of frames presenting different cross sections, according to one embodiment of the invention.
Figure 5 represents schematically some of the steps of the manufacturing process, according to one embodiment of the invention.
Figure 6 represents schematically some of the steps of the manufacturing process, according to one embodiment of the invention.
Figure 7 represents schematically some of the steps of the manufacturing process, according to one embodiment of the invention.
Figure 8 represents schematically a bending step of the manufacturing process, according to one embodiment of the invention.
Figure 9 represents schematically a cutting step of the manufacturing process, according to one embodiment of the invention.
Figure 10 represents schematically some of the steps of the manufacturing process, according to one embodiment of the invention.

### DETAILED DESCRIPTION OF THE INVENTION ACCORDING TO AN EMBODIMENT

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

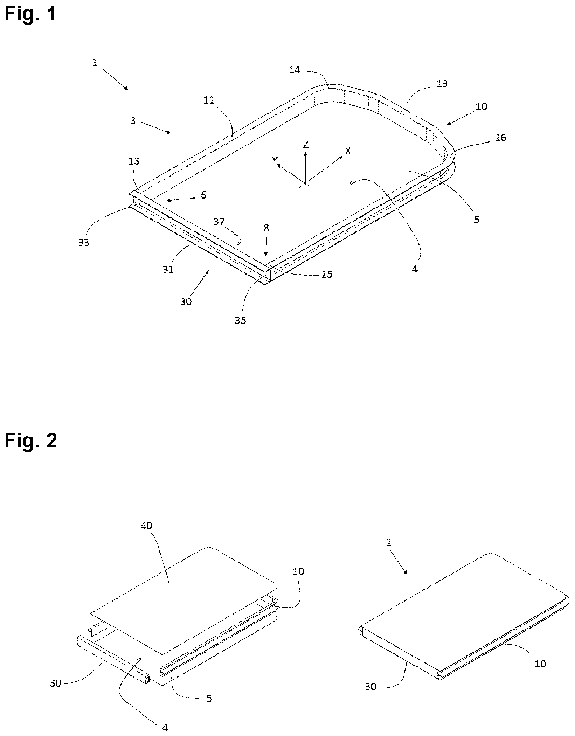

As illustrated on the figures 1 to 10, the invention concerns a battery holder 1 for a transport vehicle. More particularly said transport vehicle may be an electric or hybrid motorized transport vehicle comprising such battery holder 1.

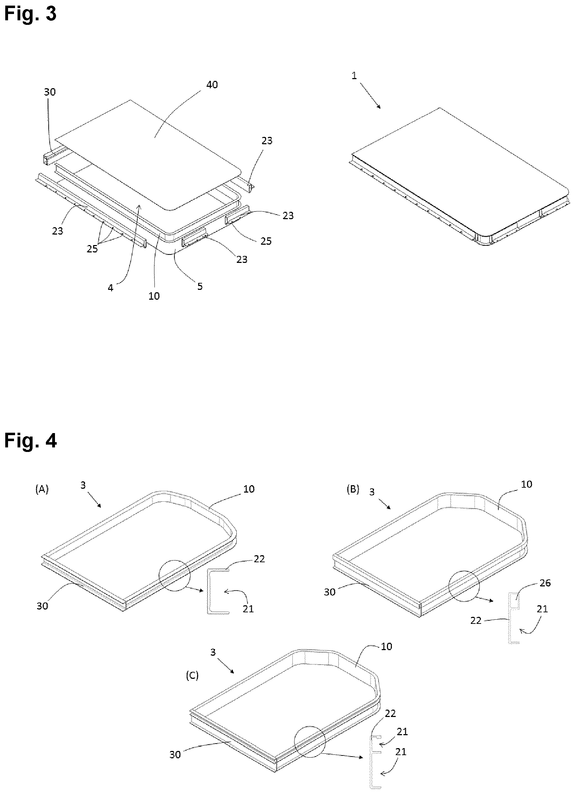

The battery holder 1 comprises a frame 3 and a floor 5 delimiting between them a housing 4 intended to receive all or part of a battery. The frame 3 comprises a main frame part 10, and a closing frame part 30 which forms a closed shape of the frame 3. Said closed shape comprises a first corner 6 and a second corner 8, and the frame 3 is connected to the floor 5. For example, the frame 3 may encircle the floor 5, but more generally, the frame 3 is attached on top of the floor 5 as illustrated on figures 2 and 3. Generally, the battery holder 1 comprises a lid 40, , and connected to the frame 3 so as to close the housing 4. Advantageously, the lid 40 is sealed to the frame 3 on a side opposite to the floor 5 with respect with the frame 3. For example, the floor 5 and the lid 40 represents two plans separated by the frame 3, the height of the frame 3 defining the height of the housing 4 between the planar floor 5 and the planar lid 40. According to one embodiment, it is possible to define a spatial reference associated to the battery holder 1, and for example attached to the floor 5. Said spatial reference may comprises following three axes:
- a longitudinal axis called "X", intended to extend longitudinally along the traveling direction of the vehicle;
- a lateral axis called "Y" extending laterally in the plane of the floor 5 and generally perpendicular to the axis X;
- a transversal axis called "Z" extending transversely relative to the plane of the floor 5.

Referring back to figure 1, the main frame part 10 comprises a main profile 11 formed in one piece. The main profile 11 may be an extruded profile, for example an aluminum extruded profile, but is not limited to. Thus, it is possible to reduce the overall manufacturing cost of the battery holder 1. Besides, using aluminum as profile material allows to reduce the overall weight of the battery holder 1.

The main profile 11 is extending along a bending curve between a first end 13 and a second end 15 of the main profile 11. The bending curve comprises a first curved portion 14 disposed between the first end 13 and the second end 15, and may comprise a second curved portion 16 distinct from the first curved portion 14. The first and second curved portion 14, 16 may be oriented so that the main profile 11 presents a concave shape, said concave shape presenting a concavity directed towards a closing element 31 included in the closing frame part 30. By "concave shape" related to the main profile 11, it is meant that said main profile 11 is curved and that the apex of the curvature belongs to a plane from which the main profile 11 moves away in the direction of the closing element 31.

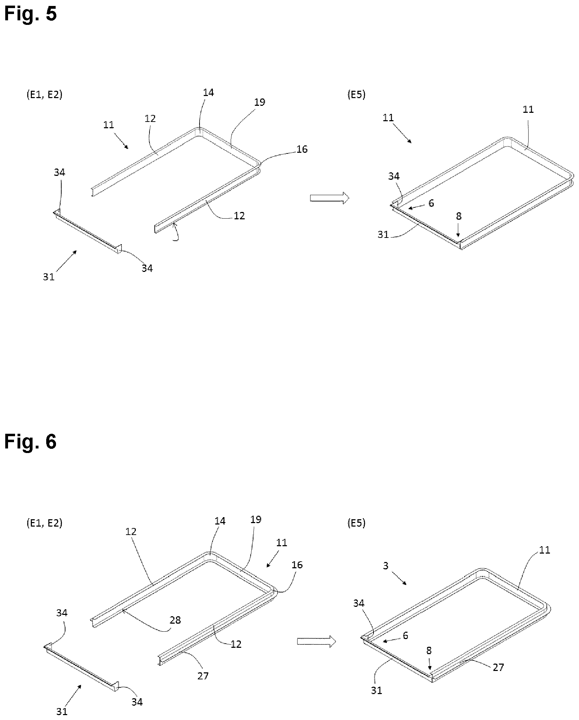

As illustrated in figures 1, and 4 to 7, the first curved portion 14 and the second curved portion 16 may be linked with each other by a straight portion 19 of the main profile 11, in a way that the bending curve presents a U shape. Figures 1 and 4 represent a particular embodiment wherein the main profile 11 comprises four different curved portions linked with each other by straight portions 19 to form the U shape of the main profile 11. According to the variant represented on figure 5 to 7, the main profile 11 comprises only two curved portions to form the U shape of the main profile. Whatever variant is considered, the main profile 11 may present two branches 12 shifted laterally along the lateral axis Y. Advantageously, said U shape helps to provide a flatter battery holder 1. This configuration allows to solve part of the sealing issues of the battery holder 1.

Generally, the main profile 11 has a cross section 22 viewed perpendicular to the bending curve which is constant along the bending curve. The cross-section of the main profile 11 along the bending curve may either presents a solid shape, or a hollow profile. A solid shape means that the cross section comprises one or many flanges integral with each other, whereas a hollow profile means that the profile comprises at least one cavity. Figure 4 illustrates three different variants, each presenting a different cross section 22. On the first variant illustrated on figure 4A, the cross section 22 presents a C shape, and comprises an admission opening 21 which is opened on a side opposite to the housing 4, with respect with the main profile 11. On the second variant represented on figure 4C, the cross section 22 presents a E shape, and comprises two admission openings 21 which are opened on a side opposite to the housing 4, with respect with the main profile 11. On this variant, the two different admission openings 21 shows different transversal dimensions. On the third variant represented on figure 4B, the cross section 22 comprises a cavity 26 associated with an admission opening 21. Advantageously, the presence of an admission opening 21 allows to insert or attach other elements to the main profile 11.

According to one embodiment, the first end 13 presents a first cross section 17 viewed in a first plan locally perpendicular to the bending curve, and the second end 15 presents a second cross section 18 viewed in a second plan locally perpendicular to the bending curve. In the case where the cross section 22 is constant along the bending curve, the first cross section 17 and the second cross section 18 presents the same shape.

As illustrated on the non-limitative embodiment of figure 6, the cross section 22 of the main profile 11 along the bending curve comprises an internal opening 28 being opened towards the housing 4 with respect with the main profile 11.

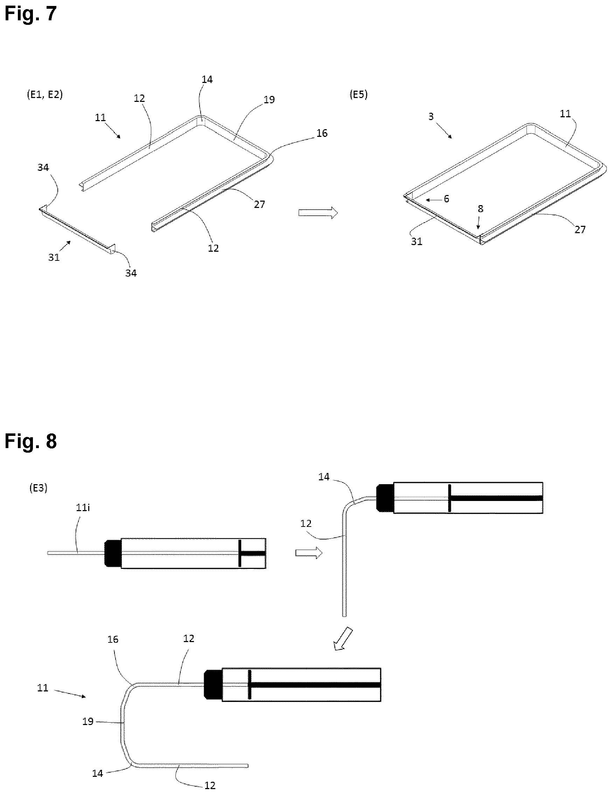

Moreover and as illustrated on figures 6 and 7, the cross section 22 of the main profile 11 may comprise a groove 27 disposed on an external surface of the main profile 11 which is on a side opposite to the housing 4, with respect with the main profile 11.

The main frame part 10 can further comprise an external profile 23 disposed opposite to the floor 5 compared to the main profile 11. Said external profile 23 is configured to absorb all or part of impact energy by an external element likely to be applied to the battery holder 1. The arrangements described above allows to protect the battery modules or cells from impacts and shocks. In the case where the cross section 22 of the main profile 11 comprise an admission opening 21, the admission opening 21 can be configured to receive the external profile 23. Thus, the external profile 23 can fit with the frame 3 structure allowing to have a better integration of the external profile 23. Advantageously, an opening dimension of the admission opening 21 can be strictly superior to a transversal dimension of the external profile 23, viewed along the transversal direction extending transversally to the plane of the floor 5, for example the transversal axis Z. The arrangement described above make it possible to decouple the main profile 11 from the external profile 23 during the assembly process. The dimensional gap between the main profile 11 and the external profile 23 which is generated by a difference in transversal dimensions of said profile, allows to compensate for eventual distortions of the main profile 11 and/or the external profile 23. Moreover, the external profile 23 may comprise mounting points 25 configured to secure the battery holder 1 to the vehicle. Thus, decoupling the main profile 11 from the external profile 23 during the frame assembly allows to ensure accurate positioning of the mounting points 25. An external profile 23 can further be positioned in the admission opening 21 of the closing element.

Referring back to figures 1 to 7, the frame 3 comprises a closing frame part 30 distinct from the main frame part 10, and comprising a closing element 31 extending along a lateral direction between a primary end portion 33 and a secondary end portion 35 of the closing element 31. For example, the lateral direction can be perpendicular to the direction of travel of the transport vehicle. Thus, the closing frame part 30 is extending along the lateral direction, which is parallel or confounded with the lateral axis Y.

According to one embodiment, the closing element 31 is a profile of the same type than the main profile 11. That is to say, the cross section, the material, and the thickness of the closing element 31 are identical to that of the main profile 11. Consequently, the advantages presented above concerning the main profile 11 especially concerning the shape and the cross section 22 applies to the closing element 31 too.

Alternatively, the closing element 31 may present a different type and a different shape with respect with the main profile 11. For example, the closing element 31 may be manufactured by casting, stamping, extrusion, or any other manufacturing process.

The closing element 31 presents externally a cooperation surface 37. For example, the cooperation surface 37 is perpendicular to the bending curve, or parallel to the lateral direction. In other words, the cooperation surface 37 is extending transversally to the floor 5.

Alternatively, the cooperation surface 37 can comprise longitudinal fins 34 extending along a longitudinal direction parallel to the longitudinal axis X, that is to say directed in the travel direction of the vehicle.

The closed shape of the frame 3 is formed when the first end 13 of the main profile 11 leans on the cooperation surface 37 and is secured to the cooperation surface 37 at the primary end portion 33 of the closing element 31 so as to form the first corner 6 of the closed shape of the frame 3, and when the second end 15 of the main profile 11 leans on the cooperation surface 37 and is secured to the cooperation surface 37 of the closing element 31 at the secondary end portion 35 of the closing element 31 so as to form the second corner 8. Thus, the arrangement constituted by the main profile 11 and the closing element 31 assembled together forms the closed shape of the frame 3 which is connected to the floor 5.

It is well understood that the frame 3 is assembled by joining the main frame part 10 and the closing frame part 30 at the first corner 6 and at the second corner 8. For example, at least one angle chosen between:
- a first angle between the lateral direction and the bending curve at the first end 13, and
- a second angle between the lateral direction and the bending curve at the second end 15,
is comprised between 80° and 120°, and more particularly between 85° and 100°, and more particularly equal to 90°. It is well understood that the first angle is disposed at the first corner 6 and that the second angle is disposed at the second corner 8. Advantageously, providing a frame 3 comprising at least one angle close or equal to a right angle allows to accommodate more battery cells or modules in the housing 4 of the battery holder 1.

In the case where the main profile 11 presents a concave shape, or a U shape, the closing frame part 30 can be secured to the main profile 11 so as to close said U shape or concave shape of the main profile 11.

According to a first embodiment represented on figures 1 and 4, the first cross section 17 of the main profile 11 leans on the cooperation surface 37 and is secured to the cooperation surface 37 at the primary end portion 33 of the closing element 31 so as to form the first corner 6. The second cross section 18 leans on the cooperation surface 37 and is secured to the cooperation surface 37 at the secondary end portion 35 of the closing element 31 so as to form the second corner 8.

According to the embodiments represented on figure 5 to 7, wherein the cooperation surface 37 comprises longitudinal fins 34, it can be advantageous that the longitudinal fins 34 are configured to be inserted between two branches 12 of the main profile 11, and more particularly to cooperate by interlocking with the main profile 11 so as to form the first corner 6 and the second corner 8. For example, as illustrated on figure 6, the internal opening 28 included in the cross section 22 of the main profile 11 may be configured to receive the longitudinal fins 34 of the cooperation surface 37 of the closing element 31.

The arrangements described above make it possible to provide a battery holder 1 with a closed shape connected to the floor 5 with the use of two frame parts. Besides, the main frame part 10 being formed in one piece allows to limit the number of joining points between different frame parts. Finally, assembling the frame 3 by securing the main frame part 10 on the cooperation surface 37 of the closing frame part 30 allows to form the first corner 6 and the second corner 8 of the frame 3 in order to keep enough space able to receive a larger amount of battery cells or modules.

The invention also concerns a manufacturing process of a battery holder 1 for a transport vehicle, for example of the type of one described above.

The manufacturing process comprises the following steps.

Figures 5 to 7 represents the steps of
- providing E1 an initial main profile 11i extending between a first end 13 and a second end 15;
- providing E2 a closing element 31 extending between a primary end portion 33 and a secondary end portion 35, the closing element 31 presenting externally, a cooperation surface 37.

According to one embodiment, the initial main profile 11i is straight.

The manufacturing process comprises then a step of bending E3 illustrated on figure 8, wherein the initial main profile 11i is bent according to a bending curve so as to form a main profile 11. The main profile 11 is thus extending along the bending curve between the first end 13 and the second end 15. Consequently, the main profile 11 has a first curved portion 14 disposed between the first end 13 and the second end 15. Generally, the first curved portion 14 is disjoint from the first end 13 and from the second end 15. The bending step E3 can also be performed so as to form a second curved portion 16 distinct from the first curved portion 14, in a way that allows to form a concave main profile 11. It is so possible to bend the initial main profile 11i according to a bending curve having a U shape, or a concave shape. The step of bending E3 is for example performed by free form bending process, or by roll bending process, or by draw bending process or any other bending process. The bending process used to perform the bending step E3 can be chosen with respect with the complexity of the cross section 22 of the main profile 11 and the desired corner radius.

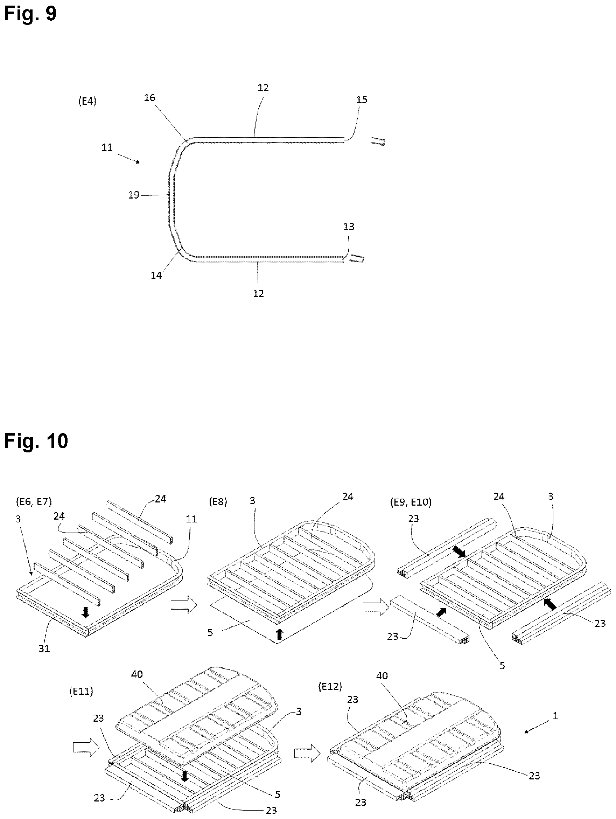

As illustrated on figure 9, the manufacturing process can also comprise a cutting E4 step of the main profile 11, wherein the main profile is cut, for example at the first end 13 and/or at the second end 15, said cutting E4 being performed after the bending E3 of the main profile 11. According to an embodiment where the main profile 11 presents a U shape, the cutting step E4 is performed so as to adjust the length of the free branches 12 formed by the U shape. Thus it is possible to adapt the size of said branches 12 before assembling E5 the closing element 31 with the main profile 11. This cutting step E4 can be used to design the shape or the orientation of the first cross section 17 and/or the second cross section 19. This orientation of the first cross section 17 and/or the second cross section 19 can be locally perpendicular to the bending curve, but is not limited to.

The frame 3 may then be assembled during a assembling step E5, wherein the closed shape of the frame 3 is formed by securing the first end 13 of the main profile 11 to the primary end portion 33 of the closing element 31, when the first end 13 of the main profile 11 is leaning on the cooperation surface 37 at the level of the primary end portion 33 so as to form a first corner 6 of the closed shape; and by securing the second end 15 of the main profile 11 to the secondary end portion 35 of the closing element 31, when the second end 15 of the main profile 11 is leaning on the cooperation surface 37 at the level of the secondary end portion 35 so as to form a second corner 8 of the closed shape. Thus, the arrangement constituted by the main profile 11 and the closing element 31 assembled together forming said closed shape comprising the first corner 6 and the second corner 8.

The manufacturing process may further comprises the following steps, illustrated on figure 10:
- providing E6 a reinforcing profile 24 configured to reinforce the mechanical strength of the frame, said reinforcing profile 24 being straight;
- securing E7 the reinforcing profile 24 by its ends to two opposite branches 12 of the U shaped main profile 11;
- assembling E8 the battery holder 1 by securing a floor 5 and the frame 3, the battery holder 1 in which the closed shape of the frame 3 is connected to the floor 5 and in which the frame 3 and the floor 5 are delimiting between them a housing 4 intended to receive all or part of a battery;
- providing E9 an external profile 23 configured to absorb all or part of side impact by an external element likely to be applied to the battery holder 1;
- securing E10 the external profile 23 with at least one profile chosen between the main profile 11 and the closing element 31, at a position opposite to the floor 5 compared to said at least one profile;
- proving E11 a lid 40;
- securing E12 the lid 40 to the frame 3 so as to close the housing 4.

## Claims

1. Battery holder (1) for a transport vehicle, the battery holder (1) comprising a frame (3) and a floor (5) delimiting between them a housing (4) intended to receive all or part of a battery, said frame (3) having a closed shape comprising a first corner (6) and a second corner (8), the frame (3) being connected to the floor (5) and comprising:
- a main frame part (10) comprising a main profile (11) formed in one piece, said main profile (11) extending along a bending curve between a first end (13) and a second end (15) of the main profile (11), said bending curve comprising a first curved portion (14) disposed between the first end (13) and the second end (15); and
- a closing frame part (30) distinct from the main frame part (10), and comprising a closing element (31) extending along a lateral direction between a primary end portion (33) and a secondary end portion (35) of the closing element (31), the closing element (31) presenting externally a cooperation surface (37); and
the first end (13) of the main profile (11) leaning on the cooperation surface (37) and being secured to the cooperation surface (37) at the primary end portion (33) of the closing element (31) so as to form the first corner (6) of the closed shape of the frame (3), and the second end (15) of the main profile (11) leaning on the cooperation surface (37) and being secured to the cooperation surface (37) of the closing element (31) at the secondary end portion (35) of the closing element (31) so as to form the second corner (8) of the closed shape of the frame (3), the arrangement constituted by the main profile (11) and the closing element (31) assembled together forming said closed shape connected to the floor (5).

2. Battery holder (1) according to claim 1, wherein the bending curve of the main profile (11) comprises a second curved portion (16) distinct from the first curved portion (14), the first curved portion (14) and the second curved portion (16) being linked with each other by a straight portion (19) of the main profile (11), in a way that the bending curve presents a U shape, the closing frame part (30) being secured to the main profile (11) so as to close said U shape of the main profile (11).

3. Battery holder (1) according to any one of claims 1 to 2, wherein at least one angle chosen between:
- a first angle between the lateral direction and the bending curve at the first end (13), and
- a second angle between the lateral direction and the bending curve at the second end (15),
is comprised between 80° and 120°, and more particularly between 85° and 100°, and more particularly equal to 90°.

4. Battery holder (1) according to any one of claims 1 to 3, wherein at least one element chosen between the main profile (11) and the closing element (31) is an extruded profile.

5. Battery holder (1) according to claim 4, wherein the at least one element comprises extruded aluminum profile.

6. Battery holder (1) according to any one of claims 4 or 5, wherein the main profile (11) has a cross section (22) viewed perpendicular to the bending curve which is constant along the bending curve.

7. Battery holder (1) according to claim 6 wherein the cross section (22) of the main profile (11) along the bending curve comprises an admission opening (21) being opened on a side opposite to the housing (4), with respect with the main profile (11).

8. Battery holder (1) according to any one of claims 1 to 7, wherein the main frame part (10) comprises an external profile (23) disposed opposite to the floor (5) compared to the main profile (11), said external profile (23) being configured to absorb all or part of impact energy by an external element likely to be applied to the battery holder (1).

9. Battery holder (1) according to claims 7 and 8, wherein the admission opening (21) is configured to receive the external profile (23).

10. Battery holder (1) according to claim 9, wherein an opening dimension of the admission opening (21) is strictly superior to a transversal dimension of the external profile (23), viewed along a transversal direction extending transversally to the plane of the floor (5).

11. Electric or hybrid motorized transport vehicle comprising a battery holder (1) according to any of claims 1 to 10.

12. A manufacturing process of a battery holder (1) for a transport vehicle comprising the following steps:
- providing (E1) an initial main profile (11i) extending between a first end (13) and a second end (15);
- providing (E2) a closing element (31) extending along a lateral direction between a primary end portion (33) and a secondary end portion (35), the closing element (31) presenting externally, a cooperation surface (37);
- bending (E3) the initial main profile (11i) according to a bending curve so as to form a main profile (11) extending along the bending curve between the first end (13) and the second end (15), the main profile (11) having a first curved portion (14) disposed between the first end (13) and the second end (15);
- assembling (E5) a frame (3) having a closed shape by securing the first end (13) of the main profile (11) to the primary end portion (33) of the closing element (31), when the first end (13) of the main profile (11) is leaning on the cooperation surface (37) at the level of the primary end portion (33) so as to form a first corner (6) of the closed shape; and by securing the second end (15) of the main profile (11) to the secondary end portion (35) of the closing element (31), when the second end (15) of the main profile (11) is leaning on the cooperation surface (37) at the level of the secondary end portion (35) so as to form a second corner (8) of the closed shape, the arrangement constituted by the main profile (11) and the closing element (31) assembled together forming said closed shape comprising the first corner (6) and the second corner (8);
- assembling (E8) the battery holder (1) by securing a floor (5) and the frame (3), the battery holder (1) in which the closed shape of the frame (3) is connected to the floor (5) and in which the frame (3) and the floor (5) are delimiting between them a housing (4) intended to receive all or part of a battery.

13. Manufacturing process according to claim 12 wherein the step of bending (E3) the initial main profile (11i) is performed according to a bending curve having a U shape.

14. Manufacturing process according to any one of claims 12 to 13, wherein the step of bending (E3) is performed by free form bending process, or by roll bending process, or by draw bending process or any other bending process.

15. Manufacturing process according to any one of claims 12 to 14, further comprising the following steps:
- providing (E9) an external profile (23) configured to absorb all or part of side impact by an external element likely to be applied to the battery holder (1);
- securing (E10) the external profile (23) with at least one profile chosen between the main profile (11) and the closing element (31), at a position opposite to the floor (5) compared to said at least one profile.

16. Manufacturing process according to claim 13, further comprising the following steps:
- providing (E6) a reinforcing profile (24) configured to reinforce the mechanical strength of the frame, said reinforcing profile (24) being straight;
- securing (E7) the reinforcing profile (24) by its ends to two opposite branches (12) of the U shaped main profile (11).

17. Manufacturing process according to any one of claims 12 to 16, further comprising cutting (E4) the main profile (11), said cutting (E4) being performed after the bending (E3) of the main profile (11).

## Patentansprüche

1. Batteriehalterung (1) für ein Transportfahrzeug, wobei die Batteriehalterung (1) einen Rahmen (3) und einen Boden (5) umfasst, die zwischen sich ein Gehäuse (4) begrenzen, das dazu gedacht ist, alles oder einen Teil einer Batterie aufzunehmen, wobei der Rahmen (3) eine geschlossene Form aufweist, die eine erste Ecke (6) und eine zweite Ecke (8) umfasst, wobei der Rahmen (3) mit dem Boden (5) verbunden ist und umfasst:
- einen Hauptrahmenteil (10), der ein Hauptprofil (11) umfasst, das in einem Stück gebildet ist, wobei sich das Hauptprofil (11) entlang einer Biegekurve zwischen einem ersten Ende (13) und einem zweiten Ende (15) des Hauptprofils (11) erstreckt, wobei die Biegekurve einen ersten gebogenen Abschnitt (14) umfasst, der zwischen dem ersten Ende (13) und dem zweiten Ende (15) angeordnet ist; und
- einen Verschlussrahmenteil (30), der sich vom Hauptrahmenteil (10) unterscheidet und ein Verschlusselement (31) umfasst, das sich entlang einer seitlichen Richtung zwischen einem primären Endabschnitt (33) und einem sekundären Endabschnitt (35) des Verschlusselements (31) erstreckt, wobei das Verschlusselement (31) außen eine Zusammenwirkfläche (37) aufweist; und
wobei das erste Ende (13) des Hauptprofils (11) an der Zusammenwirkfläche (37) lehnt und am primären Endabschnitt (33) des Verschlusselements (31) an der Zusammenwirkfläche (37) gesichert ist, um die erste Ecke (6) der geschlossenen Form des Rahmens (3) zu bilden, und wobei das zweite Ende (15) des Hauptprofils (11) an der Zusammenwirkfläche (37) lehnt und am sekundären Endabschnitt (35) des Verschlusselements (31) an der Zusammenwirkfläche (37) des Verschlusselements (31) gesichert ist, um die zweite Ecke (8) der geschlossenen Form des Rahmens (3) zu bilden,
wobei die Anordnung, die vom Hauptprofil (11) und dem Verschlusselement (31) im zusammengebauten Zustand gebildet wird, die geschlossene Form bildet, die mit dem Boden (5) verbunden ist.

2. Batteriehalterung (1) nach Anspruch 1, wobei die Biegekurve des Hauptprofils (11) einen zweiten gebogenen Abschnitt (16) umfasst, der sich vom ersten gebogenen Abschnitt (14) unterscheidet, wobei der erste gebogene Abschnitt (14) und der zweite gebogene Abschnitt (16) durch einen geraden Abschnitt (19) des Hauptprofils (11) so miteinander verbunden sind, dass die Biegekurve eine U-Form aufweist, wobei der Verschlussrahmenteil (30) am Hauptprofil (11) gesichert ist, um die U-Form des Hauptprofils (11) zu schließen.

3. Batteriehalterung (1) nach einem der Ansprüche 1 bis 2, wobei mindestens ein Winkel, ausgewählt aus:
- einem ersten Winkel zwischen der seitlichen Richtung und der Biegekurve am ersten Ende (13), und
- einem zweiten Winkel zwischen der seitlichen Richtung und der Biegekurve am zweiten Ende (15),
im Bereich zwischen 80° und 120°, und insbesondere zwischen 85° und 100°, und insbesondere gleich 90° beträgt.

4. Batteriehalterung (1) nach einem der Ansprüche 1 bis 3, wobei mindestens ein Element, ausgewählt aus dem Hauptprofil (11) und dem Verschlusselement (31), ein stranggepresstes Profil ist.

5. Batteriehalterung (1) nach Anspruch 4, wobei das mindestens eine Element ein stranggepresstes Aluminiumprofil umfasst.

6. Batteriehalterung (1) nach einem der Ansprüche 4 oder 5, wobei das Hauptprofil (11) senkrecht zur Biegekurve gesehen einen Querschnitt (22) aufweist, der entlang der Biegekurve konstant ist.

7. Batteriehalterung (1) nach Anspruch 6, wobei der Querschnitt (22) des Hauptprofils (11) entlang der Biegekurve eine Einlassöffnung (21) umfasst, die auf einer in Bezug auf das Hauptprofil (11) dem Gehäuse (4) gegenüberliegenden Seite geöffnet ist.

8. Batteriehalterung (1) nach einem der Ansprüche 1 bis 7, wobei der Hauptrahmenteil (10) ein äußeres Profil (23) umfasst, das im Vergleich zum Hauptprofil (11) dem Boden (5) gegenüberliegend angeordnet ist, wobei das äußere Profil (23) so konfiguriert ist, dass es alles oder einen Teil von Aufprallenergie durch ein äußeres Element, die wahrscheinlich auf die Batteriehalterung (1) aufgebracht wird, absorbiert.

9. Batteriehalterung (1) nach den Ansprüchen 7 und 8, wobei die Einlassöffnung (21) so konfiguriert ist, dass sie das äußere Profil (23) aufnimmt.

10. Batteriehalterung (1) nach Anspruch 9, wobei eine Öffnungsabmessung der Einlassöffnung (21), entlang einer Querrichtung gesehen, die sich quer zur Ebene des Bodens (5) erstreckt, streng größer ist als eine Querabmessung des äußeren Profils (23).

11. Transportfahrzeug mit Elektro- oder Hybridmotor, das eine Batteriehalterung (1) nach einem der Ansprüche 1 bis 10 umfasst.

12. Herstellungsprozess für eine Batteriehalterung (1) für ein Transportfahrzeug, das die folgenden Schritte umfasst:
- Bereitstellen (E1) eines anfänglichen Hauptprofils (11i), das sich zwischen einem ersten Ende (13) und einem zweiten Ende (15) erstreckt;
- Bereitstellen (E2) eines Verschlusselements (31), das sich entlang einer seitlichen Richtung zwischen einem primären Endabschnitt (33) und einem sekundären Endabschnitt (35) erstreckt, wobei das Verschlusselement (31) außen eine Zusammenwirkfläche (37) aufweist;
- Biegen (E3) des anfänglichen Hauptprofils (11i) gemäß einer Biegekurve, um ein Hauptprofil (11) zu bilden, das sich zwischen dem ersten Ende (13) und dem zweiten Ende (15) entlang der Biegekurve erstreckt, wobei das Hauptprofil (11) einen ersten gebogenen Abschnitt (14) aufweist, der zwischen dem ersten Ende (13) und dem zweiten Ende (15) angeordnet ist;
- Zusammenbauen (E5) eines Rahmens (3), der eine geschlossene Form aufweist, durch Sichern des ersten Endes (13) des Hauptprofils (11) am primären Endabschnitt (33) des Verschlusselements (31), wenn das erste Ende (13) des Hauptprofils (11) auf der Höhe des primären Endabschnitts (33) an der Zusammenwirkfläche (37) lehnt, um eine erste Ecke (6) der geschlossenen Form zu bilden; und durch Sichern des zweiten Endes (15) des Hauptprofils (11) am sekundären Endabschnitt (35) des Verschlusselements (31), wenn das zweite Ende (15) des Hauptprofils (11) auf der Höhe des sekundären Endabschnitts (35) an der Zusammenwirkfläche (37) lehnt, um eine zweite Ecke (8) der geschlossenen Form zu bilden, wobei die Anordnung, die vom Hauptprofil (11) und dem Verschlusselement (31) im zusammengebauten Zustand gebildet wird, die geschlossene Form bildet, die die erste Ecke (6) und die zweite Ecke (8) umfasst;
- Zusammenbauen (E8) der Batteriehalterung (1) durch Sichern eines Bodens (5) und des Rahmens (3), wobei bei der Batteriehalterung (1) die geschlossene Form des Rahmens (3) mit dem Boden (5) verbunden ist und wobei der Rahmen (3) und der Boden (5) zwischen sich ein Gehäuse (4) begrenzen, das dazu gedacht ist, alles oder einen Teil einer Batterie aufzunehmen.

13. Herstellungsprozess nach Anspruch 12, wobei der Schritt des Biegens (E3) des anfänglichen Hauptprofils (11i) gemäß einer Biegekurve durchgeführt wird, die eine U-Form aufweist.

14. Herstellungsprozess nach einem der Ansprüche 12 bis 13, wobei der Schritt des Biegens (E3) durch einen Freiform-Biegeprozess oder durch einen Walzbiegeprozess oder durch einen Ziehbiegeprozess oder einen anderen Biegeprozess durchgeführt wird.

15. Herstellungsprozess nach einem der Ansprüche 12 bis 14, der weiter die folgenden Schritte umfasst:
- Bereitstellen (E9) eines äußeren Profils (23), das so konfiguriert ist, dass es alles oder einen Teil von Seitenaufprall durch ein äußeres Element, der wahrscheinlich auf die Batteriehalterung (1) aufgebracht wird, absorbiert;
- Sichern (E10) des äußeren Profils (23) mit mindestens einem Profil, ausgewählt aus dem Hauptprofil (11) und dem Verschlusselement (31), an einer Position, die im Vergleich zu dem mindestens einen Profil dem Boden (5) gegenüberliegt.

16. Herstellungsprozess nach Anspruch 13, der weiter die folgenden Schritte umfasst:
- Bereitstellen (E6) eines Verstärkungsprofils (24), das so konfiguriert ist, dass es die mechanische Festigkeit des Rahmens verstärkt, wobei das Verstärkungsprofil (24) gerade ist;
- Sichern (E7) des Verstärkungsprofils (24) mit seinen Enden an zwei gegenüberliegenden Schenkeln (12) des U-förmigen Hauptprofils (11).

17. Herstellungsprozess nach einem der Ansprüche 12 bis 16, der weiter das Schneiden (E4) des Hauptprofils (11) umfasst, wobei das Schneiden (E4) nach dem Biegen (E3) des Hauptprofils (11) durchgeführt wird.

## Revendications

1. Support de batterie (1) pour un véhicule de transport, le support de batterie (1) comprenant un cadre (3) et un plancher (5) délimitant entre eux un logement (4) destiné à recevoir la totalité ou une partie d'une batterie, ledit cadre (3) ayant une forme fermée comprenant un premier coin (6) et un deuxième coin (8), le cadre (3) étant relié au plancher (5) et comprenant :
- une partie cadre principal (10) comprenant un profilé principal (11) formé d'un seul tenant, ledit profilé principal (11) s'étendant le long d'une courbure de cintrage entre une première extrémité (13) et une deuxième extrémité (15) du profilé principal (11), ladite courbure de cintrage comprenant une première portion incurvée (14) disposée entre la première extrémité (13) et la deuxième extrémité (15) ; et
- une partie cadre de fermeture (30) distincte de la partie cadre principal (10), et comprenant un élément de fermeture (31) s'étendant le long d'une direction latérale entre une portion d'extrémité primaire (33) et une portion d'extrémité secondaire (35) de l'élément de fermeture (31), l'élément de fermeture (31) présentant extérieurement une surface de coopération (37) ; et
la première extrémité (13) du profilé principal (11) s'appuyant sur la surface de coopération (37) et étant fixée à la surface de coopération (37) au niveau de la portion d'extrémité primaire (33) de l'élément de fermeture (31) de façon à former le premier coin (6) de la forme fermée du cadre (3), et la deuxième extrémité (15) du profilé principal (11) s'appuyant sur la surface de coopération (37) et étant fixée à la surface de coopération (37) de l'élément de fermeture (31) au niveau de la portion d'extrémité secondaire (35) de l'élément de fermeture (31) de façon à former le deuxième coin (8) de la forme fermée du cadre (3), l'agencement constitué par le profilé principal (11) et l'élément de fermeture (31) assemblés ensemble formant ladite forme fermée reliée au plancher (5).

2. Support de batterie (1) selon la revendication 1, dans lequel la courbure de cintrage du profilé principal (11) comprend une deuxième portion incurvée (16) distincte de la première portion incurvée (14), la première portion incurvée (14) et la deuxième portion incurvée (16) étant reliées l'une à l'autre par une portion rectiligne (19) du profilé principal (11), d'une manière telle que la courbure de cintrage présente une forme en U, la partie cadre de fermeture (30) étant fixée au profilé principal (11) de façon à fermer ladite forme en U du profilé principal (11).

3. Support de batterie (1) selon l'une quelconque des revendications 1 à 2, dans lequel au moins un angle choisi entre :
- un premier angle entre la direction latérale et la courbure de cintrage au niveau de la première extrémité (13), et
- un deuxième angle entre la direction latérale et la courbure de cintrage au niveau de la deuxième extrémité (15),
est compris entre 80° et 120°, et plus particulièrement entre 85° et 100°, et plus particulièrement égal à 90°.

4. Support de batterie (1) selon l'une quelconque des revendications 1 à 3, dans lequel au moins un élément choisi entre le profilé principal (11) et l'élément de fermeture (31) est un profilé extrudé.

5. Support de batterie (1) selon la revendication 4, dans lequel l'au moins un élément comprend un profilé en aluminium extrudé.

6. Support de batterie (1) selon l'une quelconque des revendications 4 ou 5, dans lequel le profilé principal (11) possède une section transversale (22), observée perpendiculairement à la courbure de cintrage, qui est constante le long de la courbure de cintrage.

7. Support de batterie (1) selon la revendication 6 dans lequel la section transversale (22) du profilé principal (11) le long de la courbure de cintrage comprend une ouverture d'admission (21) qui est ouverte sur un côté opposé au logement (4), par rapport au profilé principal (11).

8. Support de batterie (1) selon l'une quelconque des revendications 1 à 7, dans lequel la partie cadre principal (10) comprend un profilé externe (23) disposé à l'opposé du plancher (5) par rapport au profilé principal (11), ledit profilé externe (23) étant configuré pour absorber la totalité ou une partie d'une énergie d'impact par un élément externe susceptible d'être appliqué sur le support de batterie (1).

9. Support de batterie (1) selon les revendications 7 et 8, dans lequel l'ouverture d'admission (21) est configurée pour recevoir le profilé externe (23).

10. Support de batterie (1) selon la revendication 9, dans lequel une dimension d'ouverture de l'ouverture d'admission (21) est strictement supérieure à une dimension transversale du profilé externe (23), observé le long d'une direction transversale s'étendant transversalement au plan du plancher (5).

11. Véhicule de transport motorisé électrique ou hybride comprenant un support de batterie (1) selon l'une quelconque des revendications 1 à 10.

12. Procédé de fabrication d'un support de batterie (1) pour un véhicule de transport comprenant les étapes suivantes :
- la fourniture (E1) d'un profilé principal initial (11i) s'étendant entre une première extrémité (13) et une deuxième extrémité (15) ;
- la fourniture (E2) d'un élément de fermeture (31) s'étendant le long d'une direction latérale entre une portion d'extrémité primaire (33) et une portion d'extrémité secondaire (35), l'élément de fermeture (31) présentant extérieurement une surface de coopération (37) ;
- le cintrage (E3) du profilé principal initial (11i) selon une courbure de cintrage de façon à former un profilé principal (11) s'étendant le long de la courbure de cintrage entre la première extrémité (13) et la deuxième extrémité (15), le profilé principal (11) ayant une première portion incurvée (14) disposée entre la première extrémité (13) et la deuxième extrémité (15) ;
- l'assemblage (E5) d'un cadre (3) ayant une forme fermée par la fixation de la première extrémité (13) du profilé principal (11) à la portion d'extrémité primaire (33) de l'élément de fermeture (31), lorsque la première extrémité (13) du profilé principal (11) s'appuie sur la surface de coopération (37) au niveau de la portion d'extrémité primaire (33) de façon à former un premier coin (6) de la forme fermée ; et par la fixation de la deuxième extrémité (15) du profilé principal (11) à la portion d'extrémité secondaire (35) de l'élément de fermeture (31), lorsque la deuxième extrémité (15) du profilé principal (11) s'appuie sur la surface de coopération (37) au niveau de la portion d'extrémité secondaire (35) de façon à former un deuxième coin (8) de la forme fermée, l'agencement constitué par le profilé principal (11) et l'élément de fermeture (31) assemblés ensemble formant ladite forme fermée comprenant le premier coin (6) et le deuxième coin (8) ;
- l'assemblage (E8) du support de batterie (1) par la fixation d'un plancher (5) et du cadre (3), le support de batterie (1) dans lequel la forme fermée du cadre (3) est reliée au plancher (5) et dans lequel le cadre (3) et le plancher (5) délimitent entre eux un logement (4) destiné à recevoir la totalité ou une partie d'une batterie.

13. Procédé de fabrication selon la revendication 12 dans lequel l'étape de cintrage (E3) du profilé principal initial (11i) est réalisée selon une courbure de cintrage ayant une forme en U.

14. Procédé de fabrication selon l'une quelconque des revendications 12 à 13, dans lequel l'étape de cintrage (E3) est réalisée par un procédé de cintrage à forme libre, ou par un procédé de cintrage par roulage, ou par un procédé de cintrage par étirage ou tout autre procédé de cintrage.

15. Procédé de fabrication selon l'une quelconque des revendications 12 à 14, comprenant en outre les étapes suivantes :
- la fourniture (E9) d'un profilé externe (23) configuré pour absorber la totalité ou une partie d'un impact latéral par un élément externe susceptible d'être appliqué sur le support de batterie (1) ;
- la fixation (E10) du profilé externe (23) avec au moins un profilé choisi entre le profilé principal (11) et l'élément de fermeture (31), à une position opposée au plancher (5) par rapport audit au moins un profilé.

16. Procédé de fabrication selon la revendication 13, comprenant en outre les étapes suivantes :
- la fourniture (E6) d'un profilé de renfort (24) configuré pour renforcer la résistance mécanique du cadre, ledit profilé de renfort (24) étant rectiligne ;
- la fixation (E7) du profilé de renfort (24) par ses extrémités à deux branches opposées (12) du profilé principal (11) en forme de U.

17. Procédé de fabrication selon l'une quelconque des revendications 12 à 16, comprenant en outre la découpe (E4) du profilé principal (11), ladite découpe (E4) étant réalisée après le cintrage (E3) du profilé principal (11).
